# FASCICULE DE BREVET EUROPEEN

(11) **EP 3 234 435 B1**
(45) Date de publication et mention de la délivrance du brevet: **24.07.2019**
(21) Numéro de dépôt: 15823694.3
(22) Date de dépôt: 18.12.2015
(51) Int. Cl.: F16L 41/04, F16L 55/115, F16L 55/10

(54) **DISPOSITIF ET PROCÉDÉ D'INTERVENTION SUR UNE DÉRIVATION D'UNE CONDUITE DE FLUIDE**
VORRICHTUNG UND VERFAHREN ZUM EINGREIFEN AN EINEM AST EINER FLUIDLEITUNG
DEVICE AND METHOD FOR INTERVENING ON A BRANCH OF A FLUID CONDUIT

(30) Priorité: 18.12.2014 FR 1462799
(43) Date de publication de la demande: 25.10.2017
(73) Titulaire: GRDF, 75009 Paris (FR)
(72) Inventeur: DUNAND, Christophe, 35330 Maure de Bretagne (FR); SCULTEUR, Jacques, 20243 Prunelli Di Fiumorbo (FR)
(74) Mandataire: Cornuejols, Georges
(86) Numéro de dépôt international: PCT/FR2015/053661
(87) Numéro de publication internationale: WO 2016/097660

(56) Documents cités:
- EP-A1- 0 462 858
- DE-A1-102007 016 749
- JP-A- 2006 334 707
- US-A1- 2008 105 683

## Description

### DOMAINE TECHNIQUE DE L'INVENTION

La présente invention vise un dispositif d'intervention sur une dérivation d'une conduite de fluide et un procédé d'intervention sur une dérivation d'une conduite de fluide. Elle s'applique, notamment, à la suppression de piquage de conduites de gaz.

### ETAT DE LA TECHNIQUE

Dans le domaine des conduites de gaz à basse pression, certaines conduites actuellement déployées dans des parcs de distribution de gaz présentent des piquages directs avec départ plomb. Ces piquages directs sont considérés comme un facteur de risque et doivent, notamment en France, être supprimés par les opérateurs de réseaux de distribution de gaz.

Dans certains systèmes actuels, plusieurs trous de terrassement sont creusés dans le sol autour du piquage de manière à révéler un segment de la conduite de gaz en amont et un segment de la conduite de gaz en aval du piquage à supprimer. Puis, une dérivation du gaz dans la conduite est réalisée de manière à ce que le flux de gaz ne transite plus par la partie de la conduite comportant le piquage. Le piquage est ensuite supprimé par apposition d'une bride sur une ouverture du piquage. Enfin, le bipasse est retiré.

Les inconvénients de ces systèmes sont :
- qu'ils nécessitent l'utilisation de quatre machines à ballonner pour réaliser le bipasse de manière étanche,
- qu'ils nécessitent l'intervention de deux opérateurs pendant des durées de plusieurs heures, un de ces opérateurs ayant une qualification de soudeur,
- que le coût d'une telle intervention sur un piquage est élevé,
- qu'ils présentent un impact environnemental lourd en raison de la réalisation de trois trous dans la voierie publique et
- qu'ils nécessitent l'interruption temporaire de la distribution de gaz par cette conduite.

Dans d'autres systèmes actuels, une résine est moulée autour du piquage direct et ce piquage est écrasé et maté.

Les inconvénients de ces systèmes sont :
- qu'ils nécessitent une longue durée de préparation avant moulage, notamment en raison du nécessaire nettoyage du piquage par un opérateur,
- qu'il subsiste un appendice de plusieurs centimètres de long en raison de l'écrasement et du matage du piquage,
- qu'ils nécessitent une durée d'intervention de plusieurs heures et
- qu'ils présentent un risque environnemental en raison de possibles fuites de fluide ultérieures à la réalisation du moulage.

On connaît, notamment, des systèmes tels que décrits dans le document JP 2006334707. Ce document enseigne un dispositif de découpe d'une conduite principale de gaz en vue d'attacher à l'ouverture ainsi découpée une conduite secondaire. Ainsi, le dispositif représenté en figure 9 à 12 met en jeu le procédé suivant :
- une conduite de dérivation est positionnée en regard de l'endroit où sera percée l'ouverture dans la conduite principale, aucun gaz ne traversant à ce moment la conduite de dérivation,
- la conduite de dérivation est ouverte,
- un sas est positionné sur la conduite de dérivation,
- la conduite principale est percée par l'ouverture de la conduite de dérivation,
- l'ouverture de la conduite principale est bouchée par un bouchon temporaire,
- la conduite de dérivation et le sas sont retirés conjointement et
- la conduite secondaire est fixée à la conduite principale

Il ressort de ce procédé que, de par la structure du dispositif de fixation du sas à la conduite de dérivation, et l'objectif de cette dernière, la mise en oeuvre d'un tel dispositif ne conviendrait pas à une conduite de dérivation parcourue de gaz du fait que la conduite de dérivation doit être ouverte avant de positionner le sas, ce qui, dans le cas d'une conduite parcourue de gaz, entraînerait un échappement du gaz.

Pour l'ensemble de ces raisons, il n'existe pas aujourd'hui de système satisfaisant pour réaliser la suppression d'un piquage d'une conduite de gaz, et plus généralement de fluide.

### OBJET DE L'INVENTION

La présente invention vise à remédier à tout ou partie de ces inconvénients.

A cet effet, selon un premier aspect, la présente invention vise un dispositif d'intervention sur une dérivation d'une conduite de fluide selon la revendication 1.

Grâce à ces dispositions, la réalisation d'une seule tranchée, au niveau du point d'intérêt de la conduite de fluide, est suffisante. De plus, la mise en place d'un tel dispositif d'intervention ne nécessite qu'un opérateur unique. Le dispositif objet de la présente invention réduit le coût d'intervention par rapport aux systèmes connus et une durée d'intervention plus faible. De plus, ces dispositions permettent d'intervenir sur la dérivation à des températures comprises entre -5°C et 30°C, contrairement aux systèmes de l'art antérieur ne fonctionnant pas à une température négative.

Dans des modes de réalisation, le dispositif objet de la présente invention est mis en oeuvre pour réaliser une suppression d'une dérivation d'une conduite de fluide, le dispositif comportant un moyen de fixation d'une bride fermant une ouverture de la dérivation, la bride et le moyen de fixation étant positionnés dans le sas gonflable avant la fixation du sas au flasque.

Ces modes de réalisation permettent de réaliser la suppression d'une dérivation avec la bride et le moyen de fixation présents à l'intérieur du sas gonflé. La préhension de cette bride et du moyen de fixation est réalisée par insertion, dans chaque protubérance du sas gonflable, d'une main d'un opérateur. La manipulation des outils et des pièces nécessaires est ainsi facilitée.

Dans des modes de réalisation, le flasque comporte une vanne traversant une partie du flasque pour gonfler ou vider un sas gonflable lorsque la vanne est ouverte,

L'avantage de ces modes de réalisation est qu'ils permettent de gonfler le sas avant l'intervention sur la dérivation, par exemple en utilisant une pompe ou une bonbonne d'air sous pression, de manière à ce que le fluide transitant à travers la conduite n'entre que peu, voire pas, dans le sas gonflable du fait que ce sas gonflable présente une pression inférieure ou égale à celle à l'intérieur de la conduite.

Dans des modes de réalisation, le dispositif objet de la présente invention comporte un moyen d'insertion d'air sous pression dans le sas à une pression inférieure ou égale à la pression du fluide de la conduite.

Ces modes de réalisation empêchent la sortie de fluide par la dérivation pendant l'intervention.

Dans des modes de réalisation, le sas est gonflé à une pression inférieure ou égale à 50 mbar.

L'avantage de ces modes de réalisation est qu'ils permettent une intervention sur des conduites dites « à basse pression », c'est à dire à une pression inférieure à 50 mbar.

Dans des modes de réalisation, le moyen de verrouillage comporte un moyen de serrage d'une partie du flasque vers l'autre partie.

Ces modes de réalisation permettent de renforcer l'étanchéité du sas autour de la dérivation de manière à éviter des fuites de fluide pendant l'intervention réalisée sur la dérivation.

Dans des modes de réalisation, le sas gonflable est transparent.

L'avantage de ces modes de réalisation est qu'ils permettent à un opérateur de voir à travers la paroi du sas, ce qui facilite grandement la manipulation d'objets à l'intérieur du sas.

Dans des modes de réalisation, le flasque comporte un support rigide, pour pièces et/ou outils d'intervention.

Ces modes de réalisation ont l'avantage de permettre le dépôt d'outils et/ou de pièces pendant l'intervention pour éviter des risques de perçage du sas par les outils et/ou pièces.

Selon un deuxième aspect, la présente invention vise un procédé d'intervention sur une dérivation d'une conduite de fluide, qui comporte :
- une étape de fixation d'un flasque amovible comportant :
   - une étape de liaison de deux parties reliées par une jonction amovible présentant, lorsque les deux parties sont reliées, une ouverture entourant la dérivation et
   - une étape de verrouillage du flasque autour de la dérivation pour que l'ouverture entoure la dérivation de manière étanche,
- une étape de fixation étanche d'un sas gonflable au flasque,
- une étape d'ouverture de la dérivation.

Dans des modes de réalisation, le procédé objet de la présente invention comporte une étape de vérification d'étanchéité du sas réalisée par gonflement du sas.

Ces modes de réalisation permettent de détecter un risque de fuite de gaz susceptible d'être dangereux pour un opérateur à proximité du dispositif.

Dans des modes de réalisation, le procédé objet de la présente invention est mis en oeuvre pour supprimer la dérivation, ce procédé comportant :
- en amont de l'étape de fixation du sas, une étape de dépôt d'une bride et d'un moyen de fixation de la bride fermant une ouverture de la dérivation à l'intérieur du sas gonflable comportant un corps gonflable présentant deux protubérances gonflables et
- en aval de l'étape d'ouverture de la dérivation, une étape de pose de la bride sur l'ouverture de la dérivation.

Dans des modes de réalisation, le procédé objet de la présente invention comporte une étape d'insertion d'air sous pression à travers une vanne traversant le flasque pour porter la pression du sas à une pression inférieure à la pression du fluide dans la conduite.

Les buts, avantages et caractéristiques particulières du procédé objet de la présente invention étant similaires à ceux du dispositif objet de la présente invention, ils ne sont pas rappelés ici.

### BREVE DESCRIPTION DES FIGURES

D'autres avantages, buts et caractéristiques particulières de l'invention ressortiront de la description non limitative qui suit d'au moins un mode de réalisation particulier du dispositif et du procédé objet de la présente invention, en regard des dessins annexés, dans lesquels :
- la figure 1 représente, schématiquement et en vue de côté, un mode de réalisation particulier du dispositif objet de la présente invention, avant montage en vue d'une intervention,
- la figure 2 représente, schématiquement et en vue de profil, le mode de réalisation particulier du dispositif objet de la présente invention illustré en figure 1, pendant une intervention et
- la figure 3 représente, sous forme d'un logigramme, des étapes d'un mode de réalisation particulier du procédé objet de la présente invention.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse. Par ailleurs, chaque paramètre d'un exemple de réalisation peut être mis en oeuvre indépendamment d'autres paramètres dudit exemple de réalisation.

On note dès à présent que les figures ne sont pas à l'échelle.

Par « dérivation », on entend notamment toute antenne ou branchement réalisé sur une conduite de fluide, par exemple.

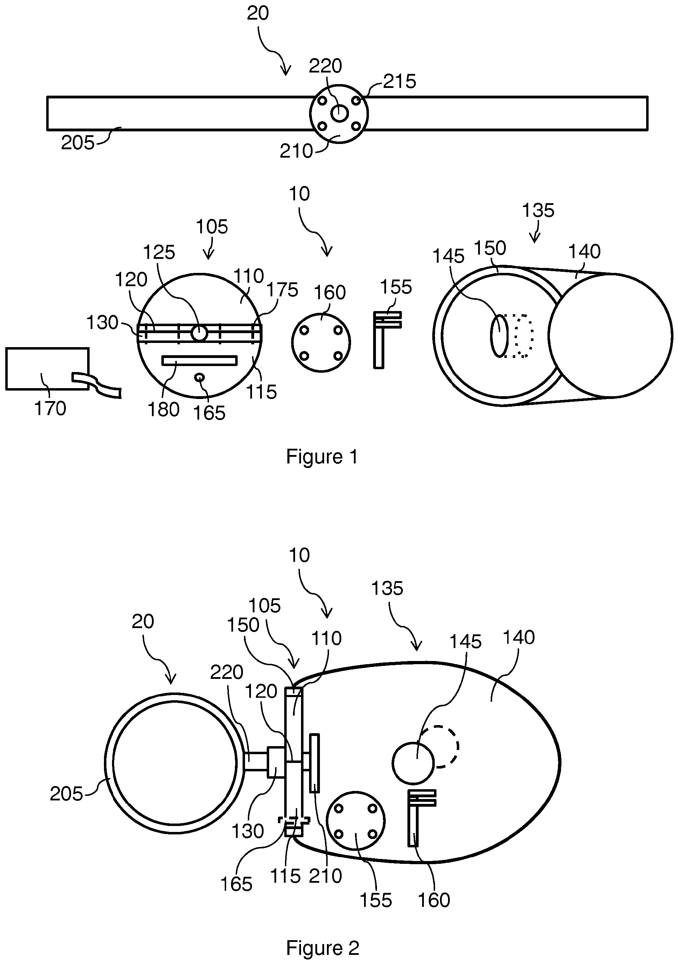

On observe, sur la figure 1, qui n'est pas à l'échelle, une vue en élévation, un mode de réalisation du dispositif 10 objet de la présente invention. Ce dispositif 10 d'intervention sur une dérivation d'une conduite 20 de fluide pour réaliser une suppression de la dérivation comporte un flasque 105 amovible, un sas 135 gonflable, un moyen 155 de fixation d'une bride et un moyen 170 d'insertion d'air sous pression dans le sas gonflable 135.

Le flasque 105 amovible comporte :
- deux parties, 110 et 115, reliées par une jonction 120 amovible présentant, lorsque les deux parties, 110 et 115, sont reliées, une ouverture 125 entourant la dérivation,
- un moyen 130 de verrouillage du flasque 105 autour de la dérivation pour que l'ouverture 125 entoure la dérivation de manière étanche, le moyen 130 de verrouillage comportant un moyen 175 de serrage d'une partie 110 du flasque 105 vers l'autre partie 115,
- une vanne 165 traversant une partie du flasque pour gonfler ou vider le sas 135 gonflable lorsque la vanne est ouverte et
- optionnellement, un support 180 rigide, pour pièces 160 et/ou outils 155 d'intervention, en forme de boîte ou, comme en figure 1, présentant une surface horizontale lorsque le flasque 105 est fixé à la dérivation.

Le sas 135 gonflable comporte :
- un corps 140 gonflable présentant au moins une protubérance 145 gonflable et
- un moyen 150 de fixation étanche au flasque 105,

Le moyen 155 de fixation permet de fixer une bride 160 fermant une ouverture 220 de la dérivation, la bride 160 et le moyen de fixation étant positionnés dans le sas 140 gonflable avant la fixation du sas au flasque 105.

Le moyen 170 d'insertion d'air sous pression injecte de l'air dans le sas gonflable 135 à une pression préférentiellement inférieure ou égale à la pression du fluide de la conduite 20.

Le flasque 105 est, par exemple, une surface circulaire rigide, par exemple métallique ou en matériau plastique, formée par deux parties, 110 et 115, en demi-cercles, le centre de cette surface étant percé d'une ouverture 125. Cette ouverture 125 est dimensionnée de manière à pouvoir entourer la dérivation selon un plan perpendiculaire à l'axe principal de cette dérivation.

Dans ce mode de réalisation, la dérivation comporte une ouverture 220 entourée par une surface 210 de fixation avec une autre canalisation ou avec une bride pour fermer l'ouverture 220. La fixation avec une autre canalisation ou avec une bride est réalisée par le biais d'écrous 215.

Le flasque 105 est positionné le long de la dérivation, entre cette surface 210 et la canalisation 205 par ouverture de la jonction 120, par positionnement des deux parties, 110 et 115, autour de la dérivation et par verrouillage des parties, 110 et 115, formant le flasque 105.

Le moyen de verrouillage 130 est, par exemple, formé par une surface sur chaque partie, 110 et 115, positionnées en regard l'une de l'autre lorsque les parties, 110 et 115, sont en vis-à-vis, et comportant des taraudages permettant la fixation de vis. Ces vis, éventuellement associées à des écrous, forment le moyen de serrage et permettent à la fois de fixer en position le flasque 105 et de rendre l'ouverture 125 étanche autour de la dérivation.

Dans des modes de réalisation, tels que celui illustré en figure 1, le flasque 105 comporte un support rigide 180, pour pièces 160 et/ou outils 155 de l'intervention. Ce support rigide 180 est, par exemple, une surface dépliable formant une tablette en position dépliée. Dans des variantes, ce support rigide 180 est un boîtier comportant les pièces et/ou outils de l'intervention.

Le flasque 105 comporte, de plus, une vanne 165 traversant une partie 115 du flasque 105 pour gonfler ou vider le sas 135 gonflable lorsque la vanne 165 est ouverte. Cette vanne 165 est fermée automatiquement ou manuellement par un moyen de fermeture (non représenté) situé sur la face du flasque 105 faisant face à la canalisation 105.

La vanne 165 sert à la liaison avec la sortie du moyen d'insertion d'air 170, ce moyen d'insertion d'air 170 étant, par exemple, une bombonne d'air sous pression ou une pompe à air. Ce moyen d'insertion d'air 170 a pour effet d'augmenter la pression dans le sas gonflable 135 jusqu'à une pression positive, préférentiellement inférieure ou égale à la pression à l'intérieur de la conduite 205, par exemple de 50 mbar.

Dans des variantes, le dispositif 10 comporte un moyen d'aspiration de l'air et du fluide (non représenté) depuis l'intérieur du sas gonflable 135, pour éviter des fuites du fluide qui se seraient introduit dans le sas gonflable 135 pendant l'intervention. On note que, dans des variantes, ce moyen d'aspiration peut remplacer le moyen d'insertion d'air dans le sas, si on prévoit que ce soit la pression du gaz dans la conduite qui provoque le gonflage du sas 135. Cependant, ces variantes ne présentent pas le même niveau de sécurité pour l'opérateur, ne serait-ce que parce que des résidus de gaz restent dans le sas après son dégonflage par aspiration.

Le moyen de fixation 155 d'une bride 160 est, par exemple, une clé à cliquet. Cette clé à cliquet, ainsi que la bride 160, sont positionnées à l'intérieur du sas gonflable 135 avant la fixation du sas gonflable 135 au flasque 105. De cette manière, le moyen de fixation 155 d'une bride 160 et la bride 160 sont accessibles à un opérateur dans le milieu pressurisé de l'intérieur du sas gonflable 135.

Le corps gonflable 140 est, par exemple, une surface fermée incomplète en matériau plastique transparent. Cette surface fermée présente deux protubérances 145 permettant l'insertion de mains et d'avant-bras d'un opérateur pour manipuler le moyen de fixation d'une bride 155 et la bride 160. Cette surface fermée est complétée par le moyen de fixation 150 pour définir un volume dans lequel un fluide peut être stocké, ce volume constituant le sas gonflable.

Le sas gonflable 135 comporte le moyen de fixation 150 au flasque 105. Ce moyen de fixation 150 est, par exemple, un ensemble de clips assemblés à des picots (non représentés) du flasque 105 par rotation. Ces clips sont montés sur une armature rigide de forme complémentaire à la forme du flasque 105. Le moyen de fixation 150 fixe de manière étanche le sas gonflable 135 au flasque 105.

Ainsi, comme on le comprend à la lecture de la présente description qui précède, le flasque 105 est positionné autour de la dérivation de manière étanche. Puis, le moyen de fixation 155 d'une bride 160 et la bride 160 sont positionnés dans le sas gonflable 135. Ce sas gonflable 135 est fixé de manière étanche au flasque 105 et gonflé par le moyen d'insertion d'air 170. L'opérateur réalise alors son intervention, puis démonte le dispositif, éventuellement après aspiration du contenu du sas gonflable 135.

En variante, le gonflement est réalisé par ouverture limitée de la dérivation pour que le fluide de la canalisation entre dans le volume du sas.

Le gonflement, par le biais d'air ou du fluide de la canalisation, permet de vérifier l'étanchéité du sas gonflable 135.

On observe, sur la figure 2, schématiquement et en vue de profil, un mode de réalisation particulier du dispositif 10 objet de la présente invention. Ce dispositif 10 correspond au dispositif 10 décrit en regard de la figure 1, le dispositif 10 étant assemblé autour de la dérivation pour supprimer un piquage direct avec départ plomb (non représenté).

On observe, notamment, en coupe, la conduite 20 comportant une canalisation 205 de section circulaire. Une dérivation de la canalisation 205 comporte une ouverture 220 déportée de la canalisation 205 par une conduite. Cette ouverture 220 est entourée par une surface 210 de fixation d'une bride ou d'une autre canalisation de raccord.

La conduite reliant l'ouverture 220 et la canalisation 205 est entourée par le flasque 105, une partie 110 du flasque 105 étant positionnée au dessus de la conduite et une partie 115 du flasque 105 étant positionnée sous la conduite. La jonction 120 entre les deux parties, 110 et 115, présente une ouverture (non représentée) entourant la conduite de manière étanche.

Le sas gonflable 135 est fixé au flasque 105 par le moyen de fixation 150, similaire au moyen de fixation 150 décrit en regard de la figure 1. Le corps gonflable 140 et transparent est fixé au moyen de fixation 150 et entoure la surface 210 de manière étanche. Ce sas gonflable 135 comporte deux protubérances 145 gonflables permettant l'insertion de mains d'un opérateur à l'intérieur du volume du sas gonflable 135 lorsque ce sas 135 est gonflé.

Le moyen de fixation 155 d'une bride 160 et la bride 160 sont positionnés à l'intérieur du sas gonflable 135 avant la fixation du sas gonflable 135 au flasque 105.

Le flasque 105 comporte une vanne 165 traversant la partie 115 inférieure du flasque 105 et permettant le gonflement du sas gonflable 135 par insertion d'air ou de fluide dans le volume étanche du sas gonflable 135.

Dans des variantes, le dispositif 10 comporte un moyen de vérification de l'étanchéité du sas gonflable 135. Ce moyen de vérification est, par exemple, une bombonne d'un fluide, ce fluide se déplaçant au contact d'une fuite sur une jonction non étanche du dispositif 10.

Dans des modes de réalisation (non représentés), le dispositif objet de la présente invention comporte deux flasques et un sas gonflable cylindrique fixé à chaque flasque pour entourer une conduite à traiter. Ce dispositif permet de réaliser un changement de joint sur une conduite, par exemple. De la même manière que les dispositifs, 10 et 30, les outils et pièces nécessaires à la réalisation d'une intervention sur une conduite sont insérés dans le sas avant gonflage du sas et le sas comporte des protubérances permettant l'insertion de mains d'opérateurs pour réaliser l'intervention.

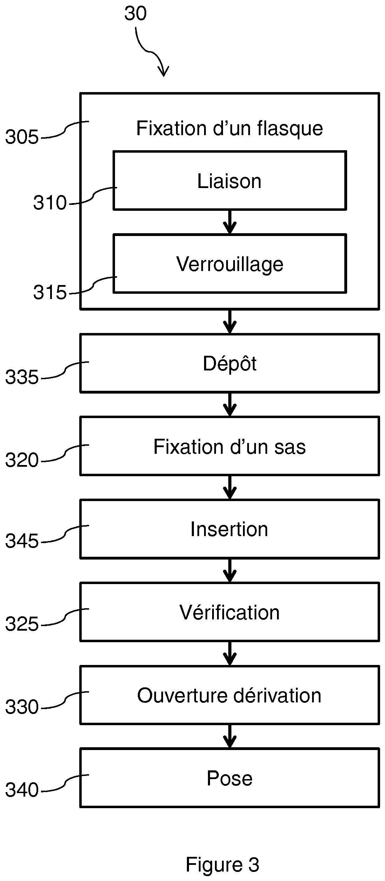

On observe, sur la figure 3, sous forme de logigramme, des étapes d'un mode de réalisation particulier du procédé 30 objet de la présente invention. Ce procédé 30 d'intervention sur une dérivation d'une conduite de fluide comporte :
- une étape 305 de fixation d'un flasque amovible comportant :
   - une étape 310 de liaison de deux parties reliées par une jonction amovible présentant, lorsque les deux parties sont reliées, une ouverture entourant la dérivation et
   - une étape 315 de verrouillage du flasque autour de la dérivation pour que l'ouverture entoure la dérivation de manière étanche,
- une étape 335 de dépôt d'une bride et d'un moyen de fixation de la bride fermant une ouverture de la dérivation à l'intérieur d'un sas gonflable comportant un corps gonflable présentant deux protubérances gonflables,
- une étape 320 de fixation étanche du sas gonflable au flasque,
- une étape 345 d'insertion d'air sous pression à travers une vanne traversant le flasque pour porter la pression du sas à une pression inférieure à la pression du fluide dans la conduite,
- une étape 325 de vérification de l'étanchéité du sas par gonflement du sas,
- une étape 330 d'ouverture de la dérivation et
- une étape de pose 340 de la bride sur l'ouverture de la dérivation.

L'étape de liaison 310 des deux parties est réalisée, par exemple, par un opérateur positionnant les deux parties du flasque de part et d'autre d'une conduite d'une dérivation d'une canalisation de fluide. Ce positionnement est réalisé, par exemple, selon un plan de section orthogonal à un axe principal de la conduite. Au cours de cette étape de liaison 310, une ouverture du flasque est positionnée autour de la conduite.

L'étape de verrouillage 315 du flasque est réalisée, par exemple, par la mise en oeuvre de vis et d'écrous traversant un ensemble de taraudages positionnés sur chaque partie du flasque en vis à vis une fois l'étape de liaison 310 réalisée. Ces vis et écrous permettent de fixer la position du flasque en plus de rendre étanche la jonction entre l'ouverture du flasque et la conduite.

L'étape de dépôt 335 est réalisée, par exemple, par un opérateur plaçant à l'intérieur du volume du sas gonflable le moyen de fixation d'une bride et la bride.

L'étape de fixation 320 étanche du sas gonflable au flasque est réalisée, par exemple, par la mise en oeuvre de clips positionnés sur une armature rigide du sas gonflable et de picots positionnés sur le flasque en regard des clips. De cette manière, lors d'une rotation de l'armature rigide du sas gonflable par rapport au flasque, une fois ces deux éléments en regard, les clips se fixent aux picots.

L'étape d'insertion 345 d'air sous pression est réalisée, par exemple, par la mise en oeuvre d'une pompe à air insérant de l'air dans le volume intérieur du sas gonflable, une fois ce sas gonflable fixé, par le biais de la vanne traversant le flasque.

L'étape de vérification 325 de l'étanchéité du sas est réalisée, par exemple, par la mise en oeuvre d'un liquide sur un lieu présumé de fuite, ce liquide étant traversé par des bulles de fluide en cas de fuite.

L'étape de gonflement du sas 330 est réalisée par les moyens mis en oeuvre au cours de l'étape d'insertion 345 d'air sous pression.

L'étape d'ouverture 330 de la dérivation est réalisée, par exemple, par un opérateur insérant ses mains à travers des protubérances du sas gonflable pour dévisser une bride couvrant l'ouverture de la dérivation.

L'étape de pose 340 est réalisée par exemple, par un opérateur insérant ses mains à travers des protubérances du sas gonflable pour positionner la bride et pour fixer cette bride à l'aide du moyen de fixation de la bride.

Une fois l'ensemble des étapes 305 à 340 réalisé, l'opérateur démonte le sas puis le flasque et range les outils et pièces résiduelles.

## Revendications

1. Dispositif (10) d'intervention sur une dérivation d'une conduite (20) de fluide, qui comporte :
= un flasque (105) amovible,
- un sas (135) gonflable comportant :
- un corps (140) gonflable présentant au moins une protubérance (145) gonflable et
- un moyen (150) de fixation étanche au flasque,
**caractérisé en ce que** la flaque amovible comporte :
- deux parties (110, 115) reliées par une jonction (120) amovible présentant, lorsque les deux parties sont reliées, une ouverture (125) apte à entourer la dérivation et
- un moyen (130) de verrouillage du flasque autour de la dérivation pour que l'ouverture entoure la dérivation de manière étanche.

2. Dispositif (10) selon la revendication 1, pour réaliser une suppression d'une dérivation d'une conduite (20) de fluide, qui comporte un moyen (155) de fixation d'une bride (160) fermant une ouverture (220) de la dérivation, la bride et le moyen de fixation étant positionnés dans le sas (140) gonflable avant la fixation du sas au flasque (105).

3. Dispositif (10) selon l'une des revendications 1 ou 2, dans lequel le flasque (105) comporte une vanne (165) traversant une partie du flasque pour gonfler ou vider un sas (135) gonflable lorsque la vanne est ouverte,

4. Dispositif (10) selon la revendication 3, qui comporte un moyen (170) d'insertion d'air sous pression dans le sas (135) à une pression inférieure ou égale à la pression du fluide de la conduite (20).

5. Dispositif (10) selon l'une des revendications 3 ou 4, dans lequel le sas (135) est gonflé à une pression inférieure ou égale à 50 mbar.

6. Dispositif (10) selon l'une des revendications 1 à 5, dans lequel le moyen (130) de verrouillage comporte un moyen (175) de serrage d'une partie (110) du flasque (105) vers l'autre partie (115).

7. Dispositif (10) selon l'une des revendications 1 à 6, dans lequel le corps (140) du sas (135) gonflable est transparent.

8. Dispositif (10) selon l'une des revendications 1 à 7, dans lequel le flasque (105) comporte un support (180) rigide, pour pièces (160) et/ou outils (155) d'intervention.

9. Procédé (30) d'intervention sur une dérivation d'une conduite de fluide, qui comporte :
- une étape (305) de fixation d'un flasque amovible,
- une étape (320) de fixation étanche d'un sas gonflable au flasque,
- une étape (330) d'ouverture de la dérivation,
**caractérisé en ce que** l'étape de fixation comporte :
- une étape (310) de liaison de deux parties reliées par une jonction amovible présentant, lorsque les deux parties sont reliées, une ouverture entourant la dérivation et
- une étape (315) de verrouillage du flasque autour de la dérivation pour que l'ouverture entoure la dérivation de manière étanche.

10. Procédé (30) selon la revendication 9, qui comporte une étape (325) de vérification d'étanchéité du sas réalisée par gonflement du sas.

11. Procédé (30) selon l'une des revendications 9 ou 10, pour supprimer la dérivation, qui comporte :
- en amont de l'étape (320) de fixation du sas, une étape (335) de dépôt d'une bride et d'un moyen de fixation de la bride fermant une ouverture de la dérivation à l'intérieur du sas gonflable comportant un corps gonflable présentant deux protubérances gonflables et
- en aval de l'étape (330) d'ouverture, une étape de pose (340) de la bride sur l'ouverture de la dérivation.

12. Procédé (30) selon l'une des revendications 9 à 11, qui comporte une étape (345) d'insertion d'air sous pression à travers une vanne traversant le flasque pour porter la pression du sas à une pression inférieure à la pression du fluide dans la conduite.

## Patentansprüche

1. Vorrichtung (10) zum Eingreifen an einem Ast einer Fluidleitung (20), die aufweist:
= einen lösbaren Flansch (105),
- eine aufblasbare Schleuse (135), aufweisend:
- einen aufblasbaren Körper (140), der mindestens einen aufblasbaren Vorsprung (145) aufweist, und
- ein Mittel zur dichten Befestigung (150) am Flansch,
**dadurch gekennzeichnet, dass** der lösbare Flansch aufweist:
- zwei Teile (110, 115), die durch eine lösbare Verbindung (120) verbunden sind, aufweisend, wenn die zwei Teile verbunden sind, eine Öffnung (125), die imstande ist, den Ast zu umgeben, und
- ein Verriegelungsmittel (130) des Flanschs um den Ast, damit die Öffnung den Ast dicht umgibt.

2. Vorrichtung (10) nach Anspruch 1 zur Realisierung einer Beseitigung eines Asts einer Fluidleitung (20), die ein Mittel (155) zur Befestigung eines Deckels (160) aufweist, welcher eine Öffnung (220) des Asts verschließt, wobei der Deckel und das Befestigungsmittel in der aufblasbaren Schleuse (140) vor der Befestigung der Schleuse am Flansch (105) positioniert sind.

3. Vorrichtung (10) nach einem der Ansprüche 1 oder 2, wobei der Flansch (105) ein Ventil (165) aufweist, welches einen Teil des Flanschs durchquert, um eine aufblasbare Schleuse (135) aufzublasen oder zu entleeren, wenn das Ventil geöffnet ist.

4. Vorrichtung (10) nach Anspruch 3, die ein Mittel (170) zum Einleiten von Luft unter Druck in die Schleuse (135) mit einem Druck unter oder gleich dem Druck des Fluids der Leitung (20) aufweist.

5. Vorrichtung (10) nach einem der Ansprüche 3 oder 4, wobei die Schleuse (135) auf einen Druck unter oder gleich 50 mbar aufgeblasen ist.

6. Vorrichtung (10) nach einem der Ansprüche 1 bis 5, wobei das Verriegelungsmittel (130) ein Spannmittel (175) eines Teils (110) des Flanschs (105) in Richtung des anderen Teils (115) aufweist.

7. Vorrichtung (10) nach einem der Ansprüche 1 bis 6, wobei der Körper (140) der aufblasbaren Schleuse (135) transparent ist.

8. Vorrichtung (10) nach einem der Ansprüche 1 bis 7, wobei der Flansch (105) einen festen Träger (180) für Teile (160) und/oder Werkzeuge (155) zum Eingreifen aufweist.

9. Verfahren (30) zum Eingreifen an einem Ast einer Fluidleitung, das aufweist:
- einen Schritt (305) des Befestigens eines lösbaren Flanschs,
- einen Schritt (320) des dichten Befestigens einer aufblasbaren Schleuse am Flansch,
- einen Schritt (330) des Öffnens des Asts,
**dadurch gekennzeichnet, dass** der Befestigungsschritt aufweist:
- einen Schritt (310) des Verbindens von zwei Teilen, die durch eine lösbare Verbindung verbunden sind, die, wenn die zwei Teile verbunden sind, eine Öffnung aufweist, die den Ast umgibt, und
- einen Schritt (315) des Verriegelns des Flanschs um den Ast, damit die Öffnung den Ast dicht umgibt.

10. Verfahren (30) nach Anspruch 9, das einen Schritt (325) des Überprüfens der durch Aufblasen der Schleuse hergestellten Dichtigkeit der Schleuse aufweist.

11. Verfahren (30) nach einem der Ansprüche 9 oder 10 zum Beseitigen des Asts, das aufweist:
- vor dem Schritt (320) des Befestigens der Schleuse einen Schritt (335) des Aufsetzens eines Deckels und eines Befestigungsmittels des Deckels, der eine Öffnung des Asts innerhalb der aufblasbaren Schleuse verschließt, aufweisend einen aufblasbaren Körper, aufweisend zwei aufblasbare Vorsprünge, und
- nach dem Schritt (330) des Öffnens einen Schritt des Montierens (340) des Deckels auf der Öffnung des Asts.

12. Verfahren (30) nach einem der Ansprüche 9 bis 11, das einen Schritt (345) des Einleitens von Luft unter Druck durch ein Ventil aufweist, welches den Flansch durchquert, um den Druck in der Schleuse auf einen Druck unterhalb des Drucks des Fluids in der Leitung zu bringen.

## Claims

1. Device (10) for intervening on a branch of a fluid conduit (20), which comprises:
- a removable flange (105);
- an inflatable airlock (135) comprising:
- an inflatable body (140) having at least one inflatable protuberance (145); and
- a means (150) for sealed attachment to the flange,
**characterized in that** the removable flange comprises:
- two portions (110, 115) linked by a removable junction (120) having, when the two portions are linked, an opening (125) that can surround the branch; and
- a locking means (130) for locking the flange around the branch such that the opening sealingly surrounds the branch.

2. Device (10) according to claim 1, for removing a branch of a fluid conduit (20), which comprises a means (155) for attaching a cap (160) closing an opening (220) of the branch, the cap and the attachment means being positioned in the inflatable airlock (140) before the airlock is attached to the flange (105).

3. Device (10) according to one of claims 1 or 2, wherein the flange (105) comprises a valve (165) passing through one portion of the flange to inflate or empty an inflatable airlock (135) when the valve is open.

4. Device (10) according to claim 3, which comprises a means (170) for inserting pressurized air into the inflatable airlock (135) at a pressure lower than or equal to the pressure of the fluid of the conduit (20).

5. Device (10) according to one of claims 3 or 4, wherein the airlock (135) is inflated to a pressure lower than or equal to 50 mbar.

6. Device (10) according to one of claims 1 to 5, wherein the locking means (130) comprises a means (175) for clamping one portion (110) of the flange (105) to the other portion (115).

7. Device (10) according to one of claims 1 to 6, wherein the body (140) of the inflatable airlock (135) is transparent.

8. Device (10) according to one of claims 1 to 7, wherein the flange (105) comprises a rigid base (180) for parts (160) and/or tools (155) for the intervention.

9. Method (30) for intervening on a branch of a fluid conduit, which comprises:
- a step (305) of attaching a removable flange;
- a step (320) of sealingly attaching an inflatable airlock to the flange;
- a step (330) of opening the branch,
**characterized in that** the attachment step comprises:
- a step (310) of connecting two portions linked by a removable junction having, when the two portions are linked, an opening surrounding the branch; and
- a step (315) of locking the flange around the branch such that the opening sealingly surrounds the branch.

10. Method (30) according to claim 9, which comprises a step (325) of checking that the airlock is sealed, achieved by inflating the airlock.

11. Method (30) according to one of claims 9 or 10, for removing the branch, which comprises:
- before the step (320) of attaching the airlock, a step (335) of depositing a cap and a means for attaching the cap closing an opening of the branch inside the inflatable airlock comprising an inflatable body having two inflatable protuberances; and,
- after the opening step (330), a step (340) of installing the cap over the opening of the branch.

12. Method (30) according to one of claims 9 to 11, which comprises a step (345) of inserting pressurized air through a valve passing through the flange to bring the pressure of the airlock below the pressure of the fluid in the conduit.
